# EUROPEAN PATENT SPECIFICATION

(11) **EP 2 758 635 B1**
(45) Date of publication and mention of the grant of the patent: **23.03.2016**
(21) Application number: 11833579.3
(22) Date of filing: 22.09.2011
(51) Int. Cl.: F01D 9/02, F02C 3/30, F01D 25/14

(54) **METHOD AND APPARATUS FOR STEAM INJECTION IN A GAS TURBINE**
VERFAHREN UND VORRICHTUNG ZUR DAMPFEINSPRITZUNG IN EINE GASTURBINE
PROCÉDÉ ET APPAREIL POUR L'INJECTION DE VAPEUR DANS UNE TURBINE À GAZ

(43) Date of publication of application: 30.07.2014
(73) Proprietor: General Electric Company, Schenectady, NY 12345 (US)
(72) Inventor: KHAYRULIN, Sergey Maskhuth, Moscow 107023 (RU); HARPER, James, Greenville, South Carolina 29615 (US); BUTTS, James Christopher, Greenville, South Carolina 29615 (US); LYSENKO, Dmitry Alexandrovich, Moscow 107023 (RU)
(74) Representative: Cleary, Fidelma
(86) International application number: PCT/RU2011/000725
(87) International publication number: WO 2013/043077

(56) References cited:
- EP-A1- 0 372 472
- EP-A2- 1 138 880
- EP-A2- 1 806 478
- GB-A- 774 425
- JP-A- 56 151 223
- JP-A- 59 160 035

## Description

This invention relates generally to gas turbine combustion technology, and more specifically, to the injection of steam into a gas turbine combustor for combustion temperature reduction and resultant power output augmentation.

### BACKGROUND

Steam injection is a technique in gas turbine combustion systems for augmenting the power output of the turbine. More specifically, the combustion process in a gas turbine typically results in the generation of oxides of nitrogen (NOx) which are considered an atmospheric pollutant. In the past, steam or water has been injected into the combustor for the purpose of reducing the flame temperature and, hence, the rate of NOx formation. In current steam injection arrangements for can-annular type combustors, the steam is injected directly through relatively large inlet holes or ports in the surrounding turbine shell, upstream of the annular array of combustor liners and in the general area of the transition pieces which funnel the hot combustion gases to the first turbine stage. The lack of steam flow guidance and resultant haphazard and uneven mixing of the injected steam with the compressor discharge air inside the turbine shell or casing has diminished the power-augmentation advantages of the steam injection techniques by decreasing flame stability and increasing unwanted emissions. This is especially evident with the advent of low emissions combustion systems which are more prevalent in modern gas turbines. Lower emissions, premixed combustion systems have less flame stability margin and more carbon monoxide sensitivity than the higher emissions, or un-premixed, diffusion flame systems.

Document EP0372472 A discloses a cooling device for the transition piece of a gas turbine.

There remains a need therefore, for a steam injection arrangement that insures better air/steam mixing before the air/steam mixture enters the combustor and mixes with fuel separately supplied to the combustor.

### BRIEF SUMMARY OF THE INVENTION

According to the invention, there is provided a gasturbine with steam injection as set forth in claim 1 and corresponding method claim 8.

Accordingly, in one exemplary but nonlimiting embodiment, the present invention relates to a gas turbine comprising a plurality of combustors within an outer turbine shell, arranged about a rotor of the gas turbine, each combustor having a combustion chamber defined by a liner with an end cover at a forward end supporting at least one fuel nozzle; a transition piece connected to an aft end of the liner for supplying hot combustion gases to a first stage of the gas turbine; and at least one steam injection rake projecting substantially radially into the outer turbine shell and located circumferentially between each pair of adjacent transition pieces, the at least one steam injection rake provided with at least one steam injection nozzle for emitting steam into areas substantially between adjacent transition pieces for mixing with air flowing within the outer shell.

In another exemplary but nonlimiting aspect, the invention relates to a gas turbine comprising a plurality of combustors within an outer turbine shell, arranged about a rotor of the gas turbine, each combustor having a combustion chamber defined by a liner with an end cover at a forward end supporting at least on fuel nozzle; a transition piece connected to an aft end of the liner for supplying hot combustion gases to a first stage of the gas turbine; and at least two steam injection rakes projecting radially into the outer turbine shell and located circumferentially between each pair of adjacent transition pieces, each of the at least two steam injection rakes provided with a plurality of steam injection nozzles for emitting steam into areas substantially between adjacent transition pieces for mixing with compressor discharge air flowing within said outer shell.

In still another exemplary but nonlimiting aspect, the invention provides a method of enhancing mixing of steam injected into a turbine shell enclosing plural combustors and associated transition pieces in an annular array about the turbine rotor with compressor discharge air within the turbine shell, the method comprising providing at least one steam injection rake projecting substantially radially into the turbine shell and into areas between each adjacent pair of the associated transition pieces; providing the at least one steam injection rake with plural steam injection nozzles; and injecting steam through the plural steam injection nozzles into areas between the adjacent pairs of transition pieces.

The invention will now be described in greater detail in connection with the drawings identified below.

### BRIEF DESCRIPTION OF THE DRAWINGS

Fig. 1 is a simplified cross-section of a can-annular type combustor, illustrating a steam injection port in the combustor casing;
Fig. 2 is a partial cross-section similar to Fig. 1 but illustrating a steam injection configuration in accordance with an exemplary but nonlimiting embodiment of this invention;
Fig. 3 is a partial aft-end view of the transition piece shown in Fig. 1 and illustrating steam injection rakes on either side of the transition piece in accordance with the exemplary but nonlimiting embodiment;
Fig. 4 is a schematic detail of a steam injection rake taken from Fig. 3;
Fig. 5 is a side elevation of a gas turbine transition piece, similar to that shown in Fig. 1 but reversed in direction, and illustrating a variation of the steam injection rake shown in Figs. 3 and 4; and
Fig. 6 is a partial an aft-end view of plural can-annular combustors arranged within a turbine casing and illustrating an arrangement of steam injection rakes as shown in Fig. 5 about the interior of the casing.

### DETAILED DESCRIPTION OF THE INVENTION

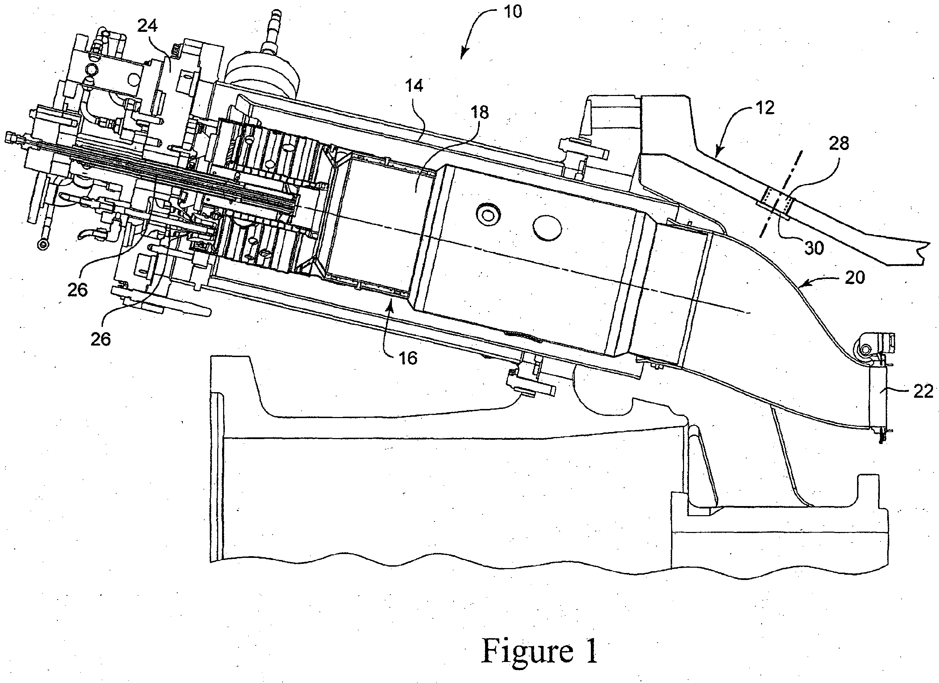

Referring initially to Fig. 1, there is illustrated a gas turbine combustor, generally designated 10, which includes an outer casing or shell 12, a flow sleeve 14 and a combustor liner 16 arranged substantially concentrically within the flow sleeve 14 and defining the combustion chamber 18. A transition piece or duct 20 is coupled to the aft or downstream end of the combustor liner 16 and supplies hot combustion gases to the first turbine section or stage, represented by a first stator blade or nozzle 22. At the forward end of the combustor 10, an end cover 24 supports a plurality of fuel nozzles 26 which project into the combustion chamber 18. The end cover 24 comprises the head or forward end of the combustor, and supplies purged air and fuel to the fuel nozzles 26, while at the same time, supplying compressor discharge air into the forward end of the liner 16 to mix with the fuel supplied by the nozzles 26. As is well known, in certain gas turbine engines, a plurality of combustors 10 are arranged in an annular array about the turbine rotor axis, with combustion gases supplied to the turbine stages by the several associated transition pieces 20, also arranged in an annular array. In such known arrangements, a plurality of steam inlet ports or holes 28 are located about the periphery of the casing 12 and mount one or more steam injection heads 30 that supply steam from a source outside the casing or shell to the internal area within the casing or shell 12, surrounding the array of combustors 10 and in general area of the transition pieces 20. As explained above, the current steam injection configurations result in uneven mixing of the injected steam with the compressor discharge air.

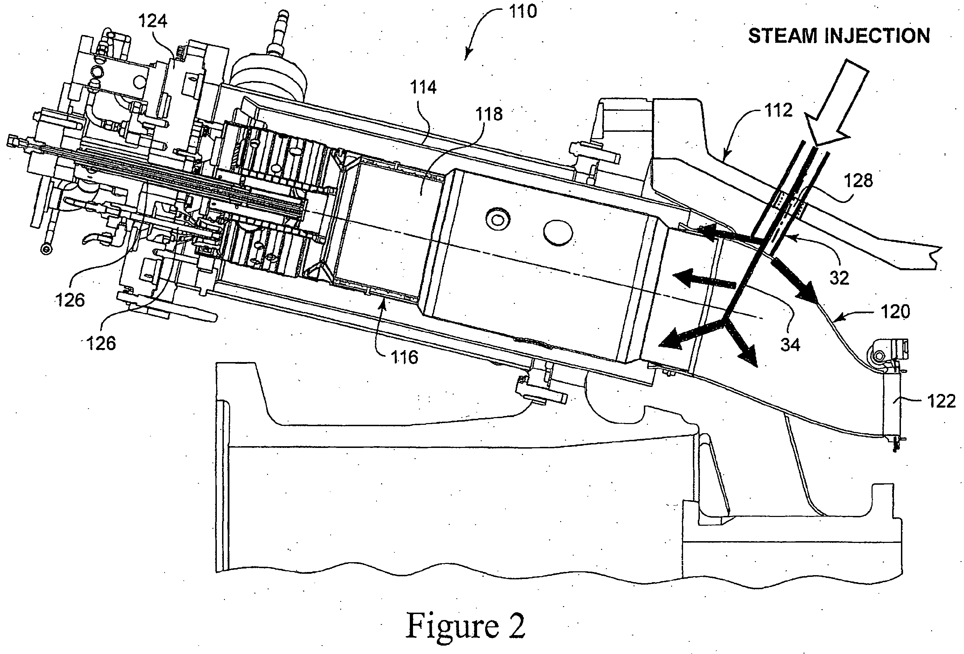

Turning now to Figs. 2-4, a generally similar can-annular type combustor 110 is shown, and similar reference numerals, but with the prefix "1" added, are used for convenience to identify corresponding combustor components, the general description of which need not be repeated. In an exemplary but non-limiting embodiment of this invention, the steam inlet holes or ports 128 (which may be already-existing ports formed in the turbine shell or casing) are fitted with elongated steam injection conduits 32 which project radially into the casing or shell 112 and which have lengths sufficient to place the outlet end of the attached steam injection rakes 34 into the areas between adjacent transition pieces 120.

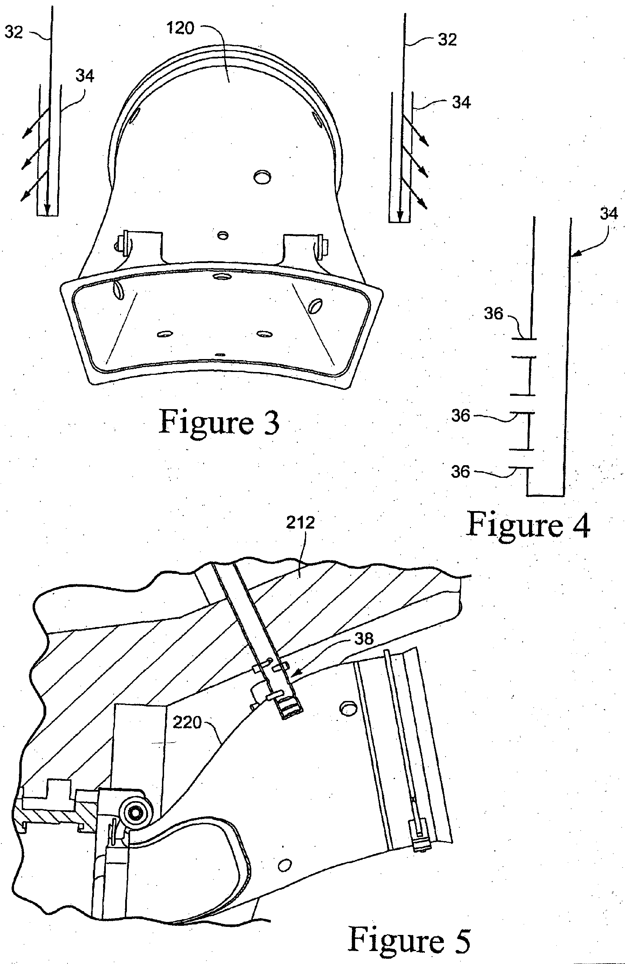

More specifically, each steam injection conduit 32 mounts a steam injection rake 34 (Figs. 3 and 4), formed to include a plurality of substantially perpendicularly-oriented discharge nozzles 36 at the remote or free end thereof as best seen in Fig. 4. Thus, the steam is injected through the plurality of small orifices or nozzles 36 distributed on the rakes 34, and the emitted steam is mixed with the compressor air flow around and about the transition pieces 120 (see Fig. 2) to thereby achieve more uniform mixing throughout. Further in this regard, it is noted that the steam is injected at a temperature that is higher than steam saturation temperature so that the risk of injecting saturated moisture is reduced (especially at commencement of steam injection, when the steam manifold between the associated gate valve and the casing is cold. It should be noted, however, that the improved mixing capabilities of this system will improve the stability of the combustion process with steam of near saturation temperature. Well-mixed steam will not affect flame stability in such a negative sense as large regions o unmixed steam.

In addition, the individual nozzles 36 need not extend substantially perpendicularly from the respective rakes 34 as shown in Fig. 4, but rather, are preferably adjusted or tuned to minimize or eliminate any direct impingement of the steam on the sides of the transition pieces 118, and to distribute the steam more evenly around the annular array of combustors 110. For example, utilizing conventional universal type nozzle mounts, it will be appreciated that the nozzles can be directed in various directions and can be angled radially downwardly (as in Fig. 3), or circumferentially to provide a circumferential swirl component to further enhance mixing with the compressor discharge air.

It will be appreciated that the number of nozzles 36 on the individual rakes 34 as well as the number of rakes 34 may be adjusted to obtain the desired degree of steam/air mixing.

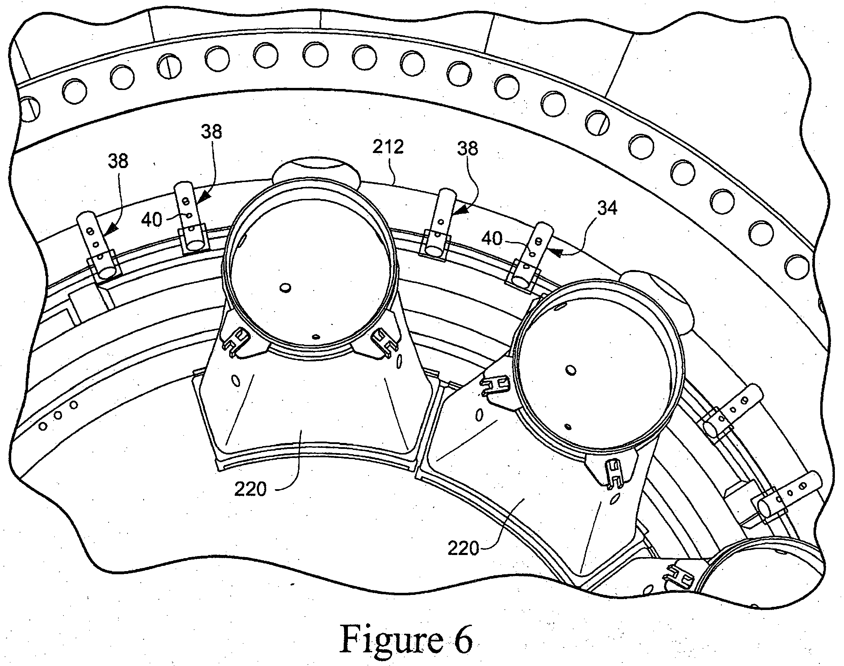

Figs. 5 and 6 illustrate a similar exemplary but nonlimiting embodiment. Again, similar reference numerals but with the prefix "2" added for convenience to identify corresponding combustor components. Here, the steam injection rakes 38 are shorter in length, but nevertheless sufficient to project radially inwardly of the radially-outermost surfaces of the transition pieces 220, enabling the adjustable nozzles 40 to provide the desired enhanced mixing of steam and compressor discharger air.

In addition, Fig. 6 illustrates an example embodiment where two steam injection rakes 38 are located between each pair of transition pieces 218, but as noted above, other arrangements are within the scope of this invention. The arrangement shown in Fig. 6 is, of course, equally applicable to the rake configurations of Figs. 2-4.

The injection of steam utilizing extended-length steam injection rakes described herein provide more uniform mixing of fuel and air which, in turn, more effectively reduces the formation of carbon monoxide.

The steam injection system, while improving intra-can distribution of steam, will also provide sufficient flow restriction as to improve inter-can distribution of steam by ensuring even steam distribution to each steam injection rake. This represents an improvement over current designs which consist of very little flow restriction at each injection location which can allow for very large location-to-location steam variance. Large differences in steam in location-to-location can cause unwanted high emissions or impact flame stability.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A gas turbine comprising:
a plurality of combustors (10) within an outer turbine shell (12), arranged about a rotor of the gas turbine (10), each combustor having a combustion chamber (18) defined by a liner (16) with an end cover (24) at a forward end supporting at least one fuel nozzle (26);
a transition piece (20,120) connected to an aft end of said liner (16) for supplying hot combustion gases to a first stage (22) of the gas turbine; and
at least one steam injection rake (34) projecting substantially radially into said outer turbine shell (12) and located circumferentially between each pair of adjacent transition pieces (120), said at least one steam injection rake (34) provided with at least two or more steam injection nozzles (36) for emitting steam into areas substantially between adjacent transition pieces (120) for mixing with air flowing within said outer shell (12), the gas turbine **characterised in that** said two or more plurality of steam injection nozzles (36) are individually adjustable so as to provide various directions of steam emission.

2. The gas turbine of claim 1, wherein said at least one steam injection rake (34) is connected to a source of steam located outside said outer shell (12).

3. The gas turbine of any preceding claim, wherein said at least one steam injection rake (34) comprises a pair of steam injection rakes (38) located circumferentially between each pair of adjacent transition pieces (218).

4. The gas turbine of any preceding claim, wherein said at least two or more steam injection nozzles (36) are aimed so that steam does not directly impinge on side walls of either of the pair of adjacent transition pieces (20,120,218).

5. The gas turbine of any of claims 2 to 4, wherein said at least one steam injection rake (34) is attached to a steam injection conduit (32) connected to said source of steam.

6. The gas turbine of any preceding claim, wherein said two or more steam injection nozzles (36) project substantially perpendicularly from said at least one steam injection rake (34).

7. The gas turbine of any preceding claim, wherein said at least two or more steam injection nozzles are angled in a circumferential direction.

8. A method of enhancing mixing of steam injected into a turbine shell (12) enclosing plural combustors (10) and associated transition pieces (20) in an annular array about the turbine rotor with compressor discharge air within said turbine shell (12), the method comprising:
a) providing at least one steam injection rake (34) projecting substantially radially into said turbine shell (12) and into areas circumferentially between each adjacent pair of said associated transition pieces (120) ;
b) providing said at least one steam injection rake (34) with plural steam injection nozzles (36), the steam injection nozzles being individually adjustable so as to provide various directions of steam emission; and
c) injecting steam through said plural steam injection nozzles (36) into areas between said adjacent pairs of transition pieces (120).

9. The method of claim 8, including adjusting said plural steam injection nozzles (36) so that steam emitted from said plural steam injection nozzles (36) does not directly impinge on said adjacent pair of transition pieces (120).

10. The method of claim 8 or 9, wherein step (a) includes providing a pair of said steam injection rakes (34) between each adjacent pair of transition pieces (120).

11. The method of any of claims 8 to 10, including connecting said at least one steam injection rake (34) to a source of steam outside the turbine shell (12).

12. The method of any of claims 8 to 11, including maintaining injected steam at a temperature higher than steam saturation temperature.

13. The method of claim 10, including adjusting said plural steam injection nozzles so that steam emitted from said plural steam injection nozzles does not directly impinge on said adjacent pair of transition pieces.

## Patentansprüche

1. Gasturbine, umfassend:
mehrere Brenner (10) innerhalb einer äußeren Turbinenhülle (12), die um einen Rotor der Gasturbine (10) angeordnet sind, wobei jeder Brenner eine Brennkammer (18) aufweist, die durch eine Auskleidung (16) mit einer Endabdeckung (24) an einem Vorderende definiert ist, welche zumindest eine Brennstoffdüse (26) stützt;
ein Übergangsstück (20, 120), das mit einem rückwärtigen Ende der Auskleidung (16) zum Zuführen von heißen Verbrennungsgasen zu einer ersten Stufe (22) der Gasturbine verbunden ist; und
zumindest einen Dampfeinspritzrechen (34), der im Wesentlichen radial in die äußere Turbinenhülle (12) vorsteht und zwischen jedem Paar von benachbarten Übergangsstücken (120) angeordnet ist, wobei der zumindest eine Dampfeinspritzrechen (34) mit zumindest zwei oder mehr Dampfeinspritzdüsen (36) zum Abgeben von Dampf in Bereiche im Wesentlichen zwischen benachbarten Übergangsstücken (120) zum Vermischen mit Luft, die innerhalb der äußeren Hülle (12) strömt, versehen ist, die Gasturbine **dadurch gekennzeichnet, dass** zwei oder mehrere Dampfeinspritzdüsen (36) zum Vorsehen von verschiedenen Dampfabgaberichtungen individuell einstellbar sind.

2. Gasturbine nach Anspruch 1, wobei der zumindest eine Dampfeinspritzrechen (34) mit einer Dampfquelle verbunden ist, die sich außerhalb der äußeren Hülle (12) befindet.

3. Gasturbine nach einem der vorhergehenden Ansprüche, wobei der zumindest eine Dampfeinspritzrechen (34) ein Paar Dampfeinspritzrechen (38) umfasst, die umfänglich zwischen jedem Paar benachbarten Übergangsstücken (218) angeordnet sind.

4. Gasturbine nach einem der vorhergehenden Ansprüche, wobei die zumindest zwei oder mehr Dampfeinspritzdüsen (36) derart gerichtet sind, dass der Dampf nicht direkt auf Seitenwände von jedem des Paars benachbarter Übergangsstücke (20, 120, 218) auftrifft.

5. Gasturbine nach einem der Ansprüche 2 bis 4, wobei der zumindest eine Dampfeinspritzrechen (34) an einer Dampfeinspritzleitung (32) angebracht ist, die mit der Dampfquelle verbunden ist.

6. Gasturbine nach einem der vorhergehenden Ansprüche, wobei die zwei oder mehr Dampfeinspritzdüsen (36) im Wesentlichen senkrecht zum zumindest einen Dampfeinspritzrechen (34) stehen.

7. Gasturbine nach einem der vorhergehenden Ansprüche, wobei die zumindest zwei oder mehr Dampfeinspritzdüsen in einer Umfangsrichtung abgewinkelt sind.

8. Verfahren zum Fördern des Vermischens von Dampf, der in eine Turbinenhülle (12) eingespritzt wird, welche mehrere Brenner (10) und zugehörige Übergangsstücke (20) in einer ringförmigen Gruppierung um den Turbinenrotor einschließt, mit Verdichterablassluft innerhalb der Turbinenhülle (12), das Verfahren umfassend:
a) Vorsehen von zumindest einem Dampfeinspritzrechen (34), der radial in die Turbinenhülle (12) und in Bereiche umfänglich zwischen jedem benachbarten Paar von zugehörigen Übergangsstücken (120) vorsteht;
b) Versehen des zumindest einen Dampfeinspritzrechens (34) mit mehreren Dampfeinspritzdüsen (36), wobei die Dampfeinspritzdüsen zum Vorsehen verschiedener Dampfabgaberichtungen individuell einstellbar sind; und
c) Einspritzen von Dampf durch die mehreren Dampfeinspritzdüsen (36) in Bereiche zwischen benachbarten Paaren von Übergangsstücken (120).

9. Verfahren nach Anspruch 8, beinhaltend das derartige Einstellen der mehreren Dampfeinspritzdüsen (36), dass Dampf, der aus den mehreren Dampfeinspritzdüsen (36) abgegeben wird, nicht direkt auf das benachbarte Paar von Übergangsstücken (120) auftrifft.

10. Verfahren nach einem der Ansprüche 8 oder 9, wobei Schritt a) das Vorsehen eines Paars der Dampfeinspritzrechen (34) zwischen jedem benachbarten Paar von Übergangsstücken (120) beinhaltet.

11. Verfahren nach einem der Ansprüche 8 bis 10, beinhaltend das Verbinden des zumindest einen Dampfeinspritzrechens (34) mit einer Dampfquelle außerhalb der Turbinenhülle (12).

12. Verfahren nach einem der Ansprüche 8 bis 11, beinhaltend das Erhalten von eingespritztem Dampf auf einer Temperatur über der Dampfsättigungstemperatur.

13. Verfahren nach Anspruch 10, beinhaltend das derartige Einstellen der mehreren Dampfeinspritzdüsen, dass Dampf, der aus den mehreren Dampfeinspritzdüsen abgegeben wird, nicht direkt auf das benachbarte Paar von Übergangsstücken auftrifft.

## Revendications

1. Turbine à gaz comprenant :
une pluralité de systèmes de combustion (10) dans une coque de turbine externe (12) aménagée autour d'un rotor de la turbine à gaz (10), chaque système de combustion (18) étant défini par une chemise (16) avec une coiffe d'extrémité (24) à une extrémité avant supportant au moins une buse à carburant (26) ;
une pièce de transition (20, 120) raccordée à une extrémité arrière de ladite chemise (16) pour fournir des gaz de combustion chauds à un premier étage (22) de la turbine à gaz ; et
un râteau d'injection de vapeur d'eau (34) faisant saillie de manière sensiblement radiale dans ladite coque de turbine externe (12) et situé sur la circonférence entre chaque paire de pièces de transition adjacentes (120), ledit au moins un râteau d'injection de vapeur d'eau (34) étant pourvu d'au moins deux ou plus de buses d'injection de vapeur d'eau (36) pour émettre de la vapeur d'eau dans des zones sensiblement comprises entre des pièces de transition adjacentes (120) pour la mélanger à de l'air s'écoulant dans ladite coque externe (12), la turbine à gaz étant **caractérisée en ce que** lesdites deux ou plus de la pluralité de buses d'injection de vapeur d'eau (36) sont réglables individuellement de manière à assurer diverses directions de l'émission de vapeur d'eau.

2. Turbine à gaz selon la revendication 1, dans laquelle ledit au moins un râteau d'injection de vapeur d'eau (34) est raccordé à une source de vapeur d'eau située à l'extérieur de ladite coque externe (12).

3. Turbine à gaz selon l'une quelconque des revendications précédentes, dans laquelle ledit au moins un râteau d'injection de vapeur d'eau (34) comprend une paire de râteaux d'injection de vapeur d'eau (38) situés sur la circonférence entre chaque paire de pièces de transition adjacentes (218).

4. Turbine à gaz selon l'une quelconque des revendications précédentes, dans laquelle lesdites au moins deux ou plus de buses d'injection de vapeur d'eau (36) sont dirigées de sorte que la vapeur d'eau ne heurte pas directement les parois latérales de l'une ou l'autre de la paire de pièces de transition adjacentes (20, 120, 218).

5. Turbine à gaz selon l'une quelconque des revendications 2 à 4, dans laquelle ledit au moins un râteau d'injection de vapeur d'eau (34) est fixé à un conduit d'injection de vapeur d'eau (32) raccordé à ladite source de vapeur d'eau.

6. Turbine à gaz selon l'une quelconque des revendications précédentes, dans laquelle lesdites deux ou plus de buses d'injection de vapeur d'eau (36) font saillie de manière sensiblement perpendiculaire audit au moins un râteau d'injection de vapeur d'eau (34).

7. Turbine à gaz selon l'une quelconque des revendications précédentes, dans laquelle lesdites au moins deux ou plus de buses d'injection de vapeur d'eau font un angle dans la direction circonférentielle.

8. Procédé de promotion du mélange de vapeur d'eau injectée dans une coque de turbine (12) enserrant plusieurs systèmes de combustion (10) et des pièces de transition associées (20) dans un réseau annulaire autour du rotor de la turbine avec de l'air de décharge du compresseur dans ladite coque de turbine (12), le procédé comprenant les étapes consistant à :
a) mettre en oeuvre au moins un râteau d'injection de vapeur d'eau (34) faisant saillie de manière sensiblement radiale dans ladite coque de turbine (12) et dans des zones situées sur la circonférence entre chaque paire adjacente desdites pièces de transition associées (120) ;
b) pourvoir ledit au moins un râteau d'injection de vapeur d'eau (34) de plusieurs buses d'injection de vapeur d'eau (36), les buses d'injection de vapeur d'eau étant individuellement réglables de manière à assurer diverses directions d'émission de vapeur d'eau ;
c) injecter de la vapeur d'eau à travers lesdites multiples buses d'injection de vapeur d'eau (36) dans des zones comprises entre lesdites paires adjacentes de pièces de transition (120).

9. Procédé selon la revendication 8, comprenant le réglage desdites multiples buses d'injection de vapeur d'eau (36) de manière que la vapeur d'eau émise par lesdites multiples buses d'injection d'eau (36) ne heurte pas directement ladite paire adjacente de pièces de transition (120).

10. Procédé selon la revendication 8 ou la revendication 9, dans lequel l'étape (a) comprend la mise en oeuvre d'une paire desdits râteaux d'injection de vapeur d'eau (34) entre chaque paire adjacente de pièces de transition (120).

11. Procédé selon l'une quelconque des revendications 8 à 10, comprenant le raccordement dudit au moins un râteau d'injection de vapeur d'eau (34) à une source de vapeur d'eau externe à la coque de turbine (12).

12. Procédé selon l'une quelconque des revendications 8 à 11, comprenant le maintien de vapeur d'eau injectée à une température supérieure à la température de saturation de la vapeur d'eau.

13. Procédé selon la revendication 10, comprenant le réglage desdites multiples buses d'injection de vapeur d'eau de sorte que la vapeur d'eau émise par lesdites multiples buses d'injection de vapeur d'eau ne heurte pas directement ladite paire adjacente de pièces de transition.
